Europäisches Patentamt

(19) European Patent Office

Office européen des brevets

(11) Publication number: 0 166 250
B1

(12) EUROPEAN PATENT SPECIFICATION

(45) Date of publication of patent specification: 05.09.90

(51) Int. Cl.⁵: G 11 B 5/86

(21) Application number: 85106587.0

(22) Date of filing: 29.05.85

(54) Contact printing apparatus.

(30) Priority: 29.05.84 JP 109173/84

(43) Date of publication of application:
02.01.86 Bulletin 86/01

(45) Publication of the grant of the patent:
05.09.90 Bulletin 90/36

(84) Designated Contracting States:
DE FR GB NL

(56) References cited:
GB-A-2 095 213
US-A-3 893 167

PATENT ABSTRACTS OF JAPAN, vol. 8, no. 33,
14th February 1984, page (P-254) (1470); &
JP-A-58-188337 (SONY) 02-11-1983
PATENT ABSTRACTS OF JAPAN, vol. 8, no. 133,
20th June 1984, page (P-281) (1570); & JP-A-59-
36331 (SONY) 28-02-1984

(73) Proprietor: SONY CORPORATION
7-35 Kitashinagawa 6-Chome Shinagawa-ku
Tokyo 141 (JP)

(72) Inventor: Hori, Takeshi
Sony Corporation 7-35, Kitashinagawa 6-chome
Shinagawa-ku Tokyo (JP)
Inventor: Higano, Yoshiharu
Sony Corporation 7-35, Kitashinagawa 6-chome
Shinagawa-ku Tokyo (JP)
Inventor: Shirai, Toshio
Sony Corporation 7-35, Kitashinagawa 6-chome
Shinagawa-ku Tokyo (JP)
Inventor: Naganuma, Toru
Sony Corporation 7-35, Kitashinagawa 6-chome
Shinagawa-ku Tokyo (JP)

(74) Representative: Schmidt-Evers, Jürgen, Dipl.-
Ing. et al
Patentanwälte Dipl.-Ing. H. Mitscherlich Dipl.-
Ing. K. Gunschmann Dipl.-Ing. Dr.rer.nat. W.
Körber Dipl.-Ing. J. Schmidt-Evers Dipl.-Ing. W.
Melzer Steinsdorfstrasse 10
D-8000 München 22 (DE)

Courier Press, Leamington Spa, England.

## Description

This invention relates to a contact printing apparatus which can make a large number of copy tapes from a master tape.

Description of the prior art

There are proposed many types of magnetic printing apparatus in order to make a large number of copy tapes from a master tape at high speed. In this case, a magnetic surface of the master tape having mirror imaged recorded patterns is contacted with a magnetic surface of a slave tape, and the magnetic patterns of the master tape are printed on the slave tape by applying a magnetic printing bias field.

In the magnetic contact printing, the quality of the copied tape is lowered very much by the slippage between the master tape and the slave tape, an air film layer between the master tape and the slave tape, the mis-alignment of the tape edges between the master tape and the slave tape and so on. Further, the service life, or the number of the printings or copyings depends upon the mechanical damage of the master tape. Accordingly, the tape transport system for both the master tape and the slave tape must be arranged to ensure that the tapes can run smoothly without the positional displacement in the width direction thereof and with a suitable tape tension and a small fluctuation of such tape tension.

Furthermore, in order to supply a cheap program tape to the market, it is necessary to reduce a printing time. As a result, the contact printing apparatus is therefore required to run the tape at high speed and hence this requires a computer to control such tape running.

In addition, since the service life of the master tape is prolonged to become able to make several thousands of printings, there is such a case where even at a pace of printing several tens of tapes per hour, in general, the same master tape is continuously used over several days to produce several thousands of printed tapes. In such case, in a production control standpoint, it is desired to provide a contact printing apparatus which has functions to check at any time a variety of data such as the total number of prints to be made, the number of printed tapes, the number of possible copy tapes for the rest of the life and so on.

Objects and summary of the invention

It is an object of this invention to provide a contact printing apparatus which can make a number of copy tapes of good quality from a master tape at high speed and which can check various data in a production control standpoint.

The invention is set out in Claim 1.

An apparatus according to the first part of Claim 1: Known from JP—A—58188337. It is known from US—A—3,893,167 in a magnetic tape duplicator, to automatically stop the copy tape at the end of the selected portion of the master and rewinding the master to the beginning of the selected portion. Metal tabs may be affixed to the master tapes downstream from the beginning and ending of the selected portion. GB—A—2,095,213 discloses a cassette containing a tape and comprising means for detecting and counting perforations on the tape and for displaying the count in order to determine the extent of tape usage.

Brief description of the drawings

Figure 1 is a diagram of an embodiment of a contact printing apparatus according to the present invention, directing to a mechanical arrangement of a tape running system thereof;

Figure 2 is a diagram useful for explaining the tape running state of the embodiment of the present invention;

Figure 3 is a block diagram showing an electrical arrangement of the embodiment of the present invention;

Figure 4 is a diagram schematically illustrating an operation section and a display section used in the embodiment of the contact printing apparatus according to the present invention;

Figure 5 is a function block diagram of a microcomputer used in the embodiment of the present invention;

Figure 6 is a flow chart useful for explaining the function block of Figure 5;

Figure 7 and Figures 8A to 8F are respectively a block diagram and timing charts used to explain the way of how to discriminate two different recording systems from each other in the present invention;

Figures 9 and 10 are respectively a graph and a block diagram useful for explaining a drive tape running control system used in the present invention;

Figure 11 is a schematic diagram showing a construction of a tension arm used in the present invention;

Figures 12 and 13 are respectively diagrams useful for explaining a tension servo control system for a slave tape in the present invention;

Figure 14 is a block diagram of a tension servo system at the supply reel side useful for explaining the tension servo control system of the present invention;

Figures 15A to 15D are respectively timing charts useful for explaining the tension servo system of Figure 14;

Figures 16 and 17 are respectively a plan view and a cross-sectional view illustrating an example of a construction of a tension arm for the drive tape used in the present invention; and

Figures 18, 19 and 20 are respectively a plan view, a front view, and a side view illustrating an example of a construction of an arm lock mechanism used in the present invention.

Description of the preferred embodiment

Now, an embodiment of a contact printing apparatus according to this invention will hereinafter be described with reference to the drawings.

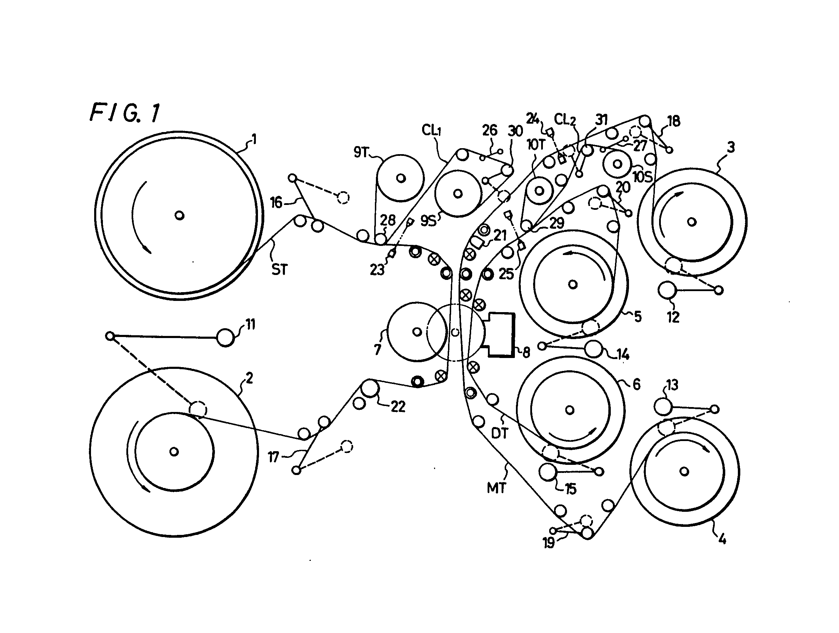

Figure 1 is a diagram schematically illustrating an embodiment of the contact printing apparatus according to the present invention, directing to a mechanical arrangement of the tape transport system thereof.

In Figure 1, reference numerals 1 and 2 respectively designate a supply reel and a take-up reel for a slave tape ST and the diameter of both of the supply reel 1 and the take-up reel 2 is about 27 cm. Reference numerals 3 and 4 respectively designate a supply reel and a take-up reel a master tape MT and reference numerals 5 and 6 respectively designate supply and take-up reels for a drive tape DT. The diameter of these reels 3 to 6 is about 18 cm. The reel disc of the reels 1 to 6 are directly coupled to reel motors (AC torque motors) 1M to 6M not shown, respectively.

Further, the reel disc of each of the reels 1 to 6 is provided with a parking brake (not shown) which prevents the tape from slackening when it stops running. Furthermore, the reel disc of each of the reels 3 to 6 for the master tape MT and the drive tape DT is provided with a rotation detector (not shown) which detects the rotation direction and the revolution number of each reel so as to servo-control the rotation speed of reel motor. This rotation detector has a high resolution to produce several tens of pulses per revolution of each reel.

The slave tape ST uses γ-iron oxide containing cobalt (coercive force Hc is nearly equal to 650 Oe) as a magnetic material. The tape width of the slave tape ST is 12.65 mm and the thickness thereof is about 20 µm. The amount of 13 rolls of 120-minute-video cassette of β-II mode (having a half tape speed of normal β system) can be wound on the supply reel 1 in the form of so-called pan cake. Of course, this slave tape ST is cut at the cue signal point after printing. The master tape MT is a so-called metal tape in which a pure iron coercive force Hc is nearly equal to 2000 Oe) is used as its magnetic material. The tape width thereof is 12.65 mm, the tape thickness with a back coat is about 27 µm and the tape length is about 380 m. The drive tape DT is made of a base material with a back coat and is 12.65 mm in tape width, about 27 µm in tape thickness and about 430 m in tape length. The tapes ST, MT and DT are respectively supplied from the supply reels 1, 3 and 5 to the take-up reels 2, 4 and 6 as shown in Figure 1.

Reference numerals 7 and 8 respectively designate a transfer drum and a contact chamber. The transfer drum 7 is made of metal and uses a static pressure air bearing in order to afford smooth rotation and high precision. In other modes than the printing mode, as shown by a solid line in Figure 1, the transfer drum 7 is remote from the contact chamber 8 and the three tapes ST, MT and DT are distant from one another, too. Upon printing mode, the transfer drum 7 is moved by an air cylinder not shown so as to become closer to the contact chamber 8 as shown by a one-dot chain line in Figure 1. The three tapes ST, MT and DT are urged against one another and the transfer drum 7 by a compressed air of 4 kg/cm² produced from the contact chamber 8. At this time, to avoid the slip of the drive tape DT, the non back-coated surface of the drive tape DT and the back-coated surface of the master tape MT come in close contact with each other. Further, a bias head not shown is disposed inside the contact chamber 8 and this bias head applies a predetermined printing magnetic field to the tapes to print magnetic patterns of video, audio and control signals of the master tape MT at the same time on the slave tape ST.

Upon printing mode, the three tapes in close contact with one another, or the master tape MT, the slave tape ST and the drive tape DT are moved together by the reel motor 6M (not shown) of the drive tape DT. At this time, the reel motor 6M is servo-controlled for speed, while the reel motor 5M of the supply reel 5 and the reel motors 1M to 4M of the reels 1 to 4 for the master tape MT and the slave tape ST are servo-controlled for tension, respectively.

Reference numerals 11 to 15 respectively designate tape urge rollers and the tape rollers 11 to 15 are adapted to prevent air from entering between the wound tapes of each of the take-up reels 2, 4 and 6 upon winding. Since the master tape MT and the drive tape DT are moved reciprocally, the reels 3, 4, and 5, 6 thereof are provided with the tape rollers 12, 13 and 14, 15.

Reference numerals 16 to 20 respectively designate tnesion arms. Upon printing mode, the tension arms 16 to 20 are respectively positioned as shown by broken lines in Figure 1 and detect the tape tensions to carry out the tension servo control as will be described later. Further, as will be described later, the tension arms 16 to 20 are respectively locked as shown by solid lines in Figure 1 upon tape loading mode (stop mode).

Reference numeral 21 designates a cue signal playback head. This cue signal playback head 21 contacts with the back surface of the master tape MT and detects a start cue and an end cue signals (for example, a sine wave signal of 65 Hz with a duration of time of 2 second) that are recorded on the master tape MT. This start cue and end cue signals are used to control the tape transport system and to discriminate the recording format of the master tape MT. A roller 22 is disposed at the take-up reel 2 side of the slave tape ST and detects the tape running speed and the print length on the basis of the rotation speed and the revolution number thereof. Reference numerals 23 to 25 respectively designate tape sensors formed of, for example, photo couplers for the slave tape ST, the master tape MT and the drive tape DT and which detect whether the above-described tapes ST, MT and DT are taken off from the supply reels 1, 3 and 5 or not or whether they reach their tape ends or not.

Reference letters $CL_1$ and $CL_2$ respectively designate first and second cleaning tapes that are each extended between the reels 9S, 9T and 10S, 10T with tension as shown in Figure 1. By rollers 28 and 29, the both cleaning tapes $CL_1$ and $CL_2$ are urged against the surfaces of the slave tape ST and the drive tape DT continuously. When the master tape MT is rewound, movable rollers 30 and 31 urge the both cleaning tapes $CL_1$ and $CL_2$ against the front and back surfaces of the master tape MT. The both cleaning tapes $CL_1$ and $CL_2$ are wound incrementally at every one printing mode so that a new portions of the cleaning tapes are used at every printing. Tape sensors 26 and 27 are provided to sense each tape end by mechanically detecting the decrease of tape tension of the cleaning tapes $CL_1$ and $CL_2$.

As shown in Figure 1, in this embodiment, there are provided a plurality of tape guides along the tape paths of respective tapes. Of these tape guides, in the vicinity of the transfer drum 7 where it is expected to strictly restrict the tape position, there are located tape guides made of alumina material having large wear-proof property whereby to restrict the lower edge or upper edge of the tapes (shown by mark ⊗ or ◎ ). In these tape guides, the portion thereof in contact with the tape surface is made of titania material (or material made of titanate dioxide) having a smooth surface and conductivity to discharge static electricity from the tapes. For the portion that is not expected to restrict the tape position so strictly, there are employed guide rollers with a ball bearing. Particularly to protect the master tape MT from wear so as to prolong its service life, the magnetic surface of the master tape MT keeps from contacting with any tape guides.

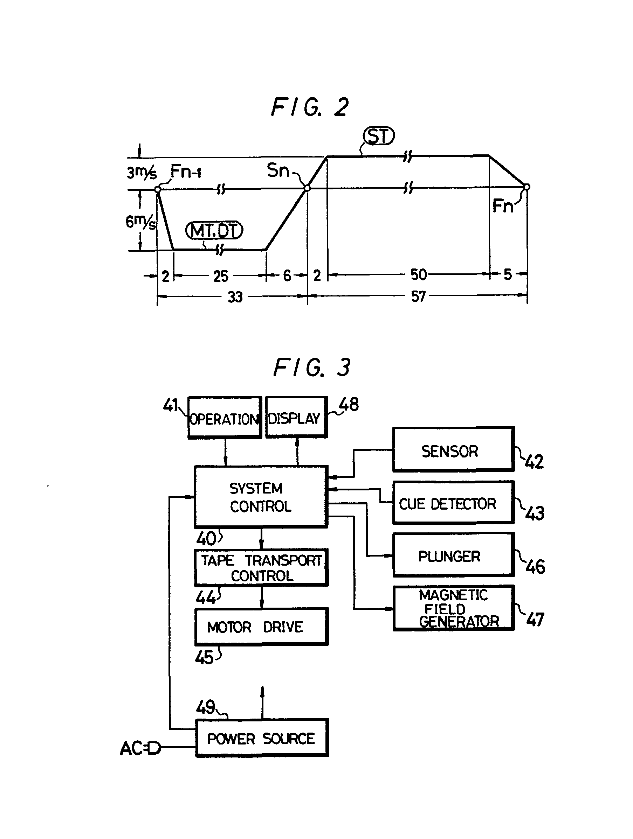

Referring to Figure 2, an example of the tape running state of this embodiment will be described. As shown in Figure 2, at a time point $F_{n-1}$ at which the tape stops running after (n−1)-th printing was ended, the rewinding of the master tape MT and the drive tape DT begins and after 2 seconds, the tape speed reaches 6 m/sec. This tape speed is kept for 25 seconds. Then, the tape speed is decelerated for 6 seconds and the tape is stopped. In this way, the rewinding of the master tape MT available for program of 120 minute-tape in βII mode is ended, and then n-th printing begins from a time point Sn. Upon printing operation, the tape speed of three tapes MT, ST and DT in close contact with one another reaches 3 m/sec (150 times as that in the βII mode) after 2 seconds from the time point Sn. The tape is kept running at this tape speed (3 m/sec) for 50 seconds, decelerated for 5 seconds and then stopped at a time point $F_n$. Accordingly, in this embodiment, it takes one minute and thirty seconds to make the print of 120 minute-program tape of βII mode.

As earlier noted, the cue signal recorded on the master tape MT is used to control the tape running. Figure 3 is a block diagram showing an electrical arrangement of this embodiment. As shown in Figure 3, a system control section 40 is provided which includes a microcomputer and this system control section 40 receives various kinds of informations from an operation section 41, a sensor section 42 and a cue detecting section 43 and supplies a control signal to a tape transport control section 44 which then controls a motor drive section 45 to operate as is predetermined. Also, this system control section 40 supplies a control signal to a plunger section 46 by which a brake member and an air cylinder are operated as desired. Upon printing mode, the system control section 40 supplies a control signal to a printing magnetic field generating section 47. Reference numeral 48 designates a display section which displays thereon various kinds of preset values of the apparatus, various kinds of data such as a remaining amount of the tape and so on, various kinds of alarms and so on in a digital fashion. A power source section 49 is also provided to supply a predetermined power to each section of the apparatus.

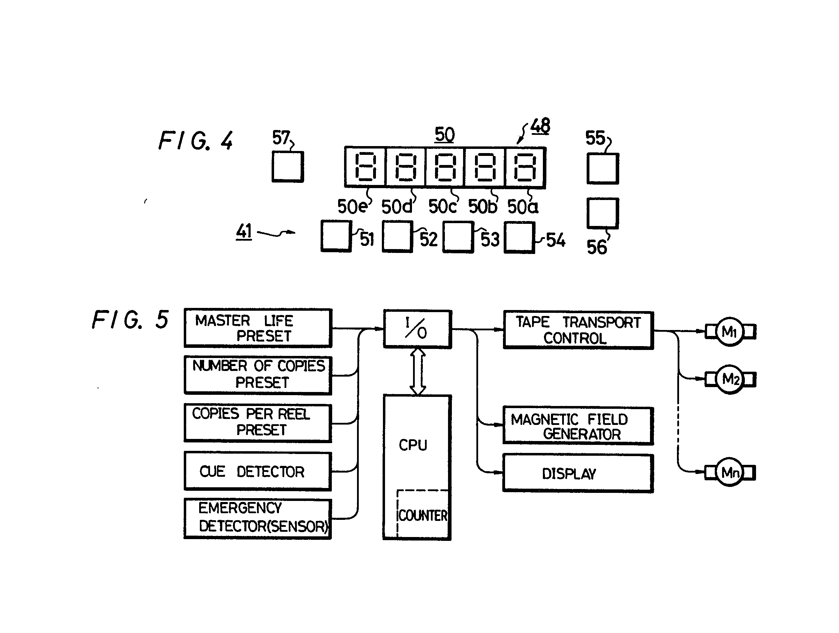

Figure 4 illustrates a main part of the above-described operation section 41 and the display section 48. Referring to Figure 4, a character display apparatus 50 is formed of 5 display elements 50a, 50b, 50c, 50d and 50e and a copy length switch 51 is used to display the tape length per one roll of a copy tape. The displayed value is available for setting a tape winder which is operated in cooperation with the contact printing apparatus of this embodiment. A master life switch 52, a print total switch 53 and a copy-per-reel switch 54 are respectively used to preset the service life of the master tape MT, the desired number of the copy rolls and the number of copy rolls per pan cake. A send switch 55 and a set switch 56 are operated when the above-described values are set and an initial set switch 57 is used to display the set initial values of various values.

Various values will be set in the following manner. At first, the set switch 56 is depressed. Then, if, for example, the master life switch 52 corresponding to the item to be set is depressed, the full digits on the character display apparatus 50 become zeroes and the numerical value on the most significant digit is blinked. When the send switch 55 is depressed and the blinking numerical value displayed reaches a desired value, the send switch 55 is released and the set switch 56 is depressed to set the desired value. Then, the next lower digit begins to blink and hence the values will be set to the least significant digit in like manner.

Whlie in the printing mode of the contact printing apparatus, the number of the copied rolls is displayed on the character display apparatus 50, if the initial value set switch 57 is depressed and then the master life switch 52 is depressed, the initial set value indicative of the service life of the master tape MT is displayed for several seconds. To know the remaining amount of the tape life, instead of the switch 57, if the master life switch 52 corresponding to the desired item is depressed immediately, the remaining amount of the service life of the master tape MT is displayed on the character display apparatus 50 for several seconds. In this manner, it is possible to check various data relating to the production control at any time.

Further, when a certain abnormality is caused during the operation of the contact printing apparatus, a mark "E" is displayed on the display element 50e of the most significant digit of the character display apparatus 50 and an alarm code is displayed on, for example, the display elements 50a and 50b of the last two digits. When a plurality of abnormalities are caused at the same time, the mark "E" is blinked on the display element 50e. In this case, the displayed alarm code is sent in turn by depressing the send switch 55, so that all the alarms can be learned.

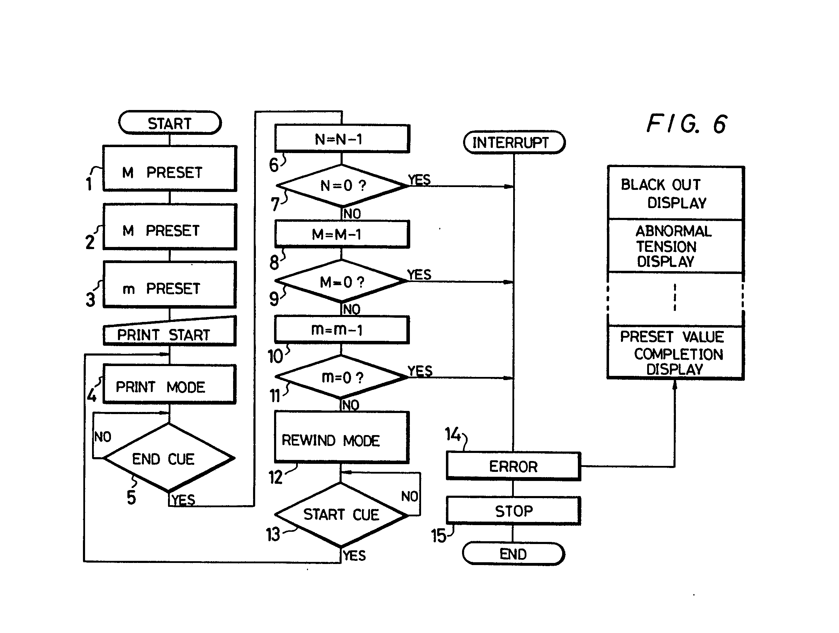

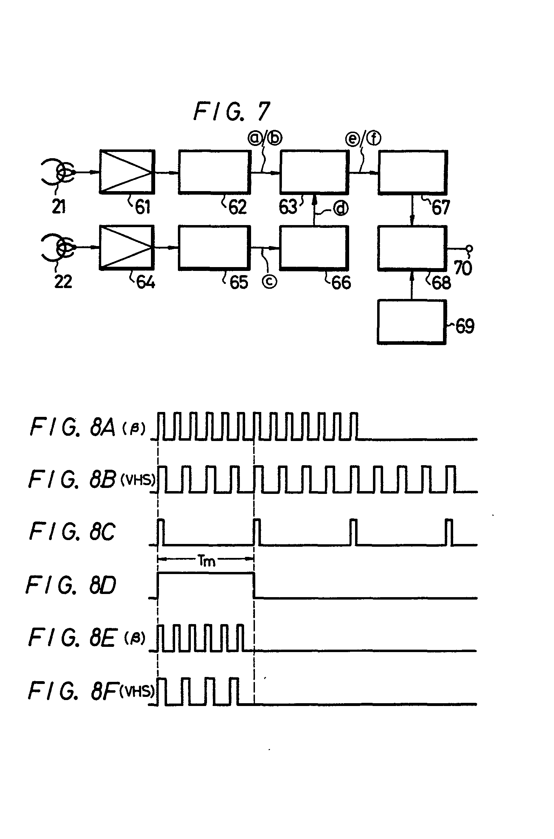

Now, the operation of the embodiment of the contact, printing apparatus according to this invention will be described with reference to Figures 5 and 6.

In steps 1 to 3 in the flow chart of Figure 6, using a master tape life setting means, a print roll number setting means and a copy/reel number setting means, the service life of the master tape (N times), the desired roll number (M) of the prints and the copy roll number (m) per reel are respectively set through an I/O interface to the counter in a central processing unit (CPU) of the microcomputer. By the start operation, the contact printing apparatus is placed in the print mode (step 4) and the CPU supplies the control signals to the tape transport control means and the printing magnetic field generating means. When the first printing was ended, the cue signal detecting means detects the end cue signal that is recorded on the master tape MT (step 5). Then, in steps 6 to 11, the initial set values N, M and m such as the service life of the master tape MT and so on are decremented by 1 and it is checked whether each initial set value keeps the remaining amount or not. If all set values keep their amounts left, the contact printing apparatus is placed in the rewind mode (step 12). At this time, the printing magnetic field generating means is disabled and the tape transport control means is operated so as to rewind the master tape MT and the drive tape DT by the control signal from the CPU. When the rewind of the master tape MT and the drive tape DT is ended, the start cue signal of the master tape MT is detected (step 13). Then, the contact printing apparatus is once again set in the printing mode.

After the similar operations is repeated, if the remaining amount of, for example, the copy number (m) per reel becomes zero, the contact printing apparatus is placed in the error mode (step 14). Then, the alarm code signal from the CPU is supplied to the display means which then displays thereon the alarm code and the control signal is supplied to the tape transport control means which stops the tape from running and thus the contact printing apparatus is placed in the stop mode (step 15). Similar operations will be made when the remaining amounts of the master service life N and the predetermined print roll number M become zero.

Further, when an accident such as an instantaneous power failure, tension abnormality and so on occurs, the detecting signal from the abnormality detecting means is interrupted and the alarm code signal corresponding to such accident is supplied from an alarm display ROM (read only memory) to the display means, thus the alarm code being displayed on the display means.

As described above, the tape running in the contact printing apparatus of this embodiment is controlled by the computer.

While in this embodiment the concidence between various initial set values such as the service life of the master tape MT and so on and their executed values is detected by the subtracting counter, it is possible to use an adding counter.

With respect to the above-described master tape MT, since the tape speed of β system is 20 mm/sec and that of VHS (video home service) system is 32 mm/sec, the both β and VHS recording systems are different in tape length on which the cue signal is recorded. In other words, they are different in the frequency of the cue signal per unit length of the master tape. Accordingly, when the printed tape is transported at a constant speed just as detecting the cut portion of the print or rewinding the print by the tape winder, the β system and the VHS system can be discriminated from each other by the difference between the frequencies of the cue signals thereof.

Referring to a block diagram of Figure 7 and timing charts of Figures 8A to 8F, an explanation will be given on the way of how to discriminate the β recording system and the VHS recording system from each other in the contact printing apparatus of the present invention shown in Figure 1.

As shown in Figure 7, the output from the cue signal reproducing head 21, or the reproduced cue signal is supplied through an amplifier 61 to a waveform shaping circuit 62. An output ⓐ or ⓑ (as shown in Figure 8A or 8B) produced from the waveform shaping circuit 62 is supplied to a gate 63. On the other hand, the output from the roller 22, or the length inspection signal is supplied through an amplifier to a waveform shaping circuit 65. A signal ⓒ (shown in Figure 8C) from the waveform shaping circuit 65 is supplied to a gate pulse generating circuit 66 which then produces a constant length signal ⓓ (shown in Figure 8D) of a pulse width equal to one cycle Tm of the length inspection signal, or the predetermined length of the tape. The gate 63 is supplied with this predetermined length signal ⓓ and is opened only during the duration of period Tm to thereby supply, as shown in Figures 8E and 8P, the pulses of the output ⓐ or ⓑ from the waveform shaping circuit 62 in the continuous period of the predetermined length signal ⓓ to a pulse counter 67 as the output ⓔ or ⓕ of the gate 63. The DC output of the pulse counter 67 is supplied to a comparator 68 in which it is compared with the output of a reference voltage generator 69. Thus the compared output therefrom is developed at an output terminal 70.

As will be clear from the above description, Figures 8A and 8E correspond to the β system, while Figures 8B and 8F correspond to the VHS system. Since the number of the pulses supplied to the pulse counter 67 becomes as about 3:2, it is possible to easily discriminate the β system and the VHS system from each other by the compared output from the comparator 68.

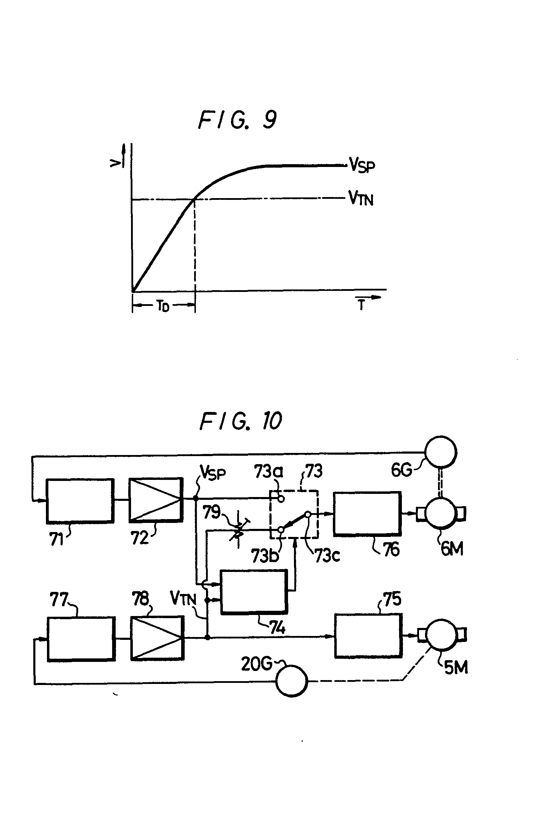

The transport control of the drive tape DT used in the embodiment of this invention will now be described with reference to Figures 9 and 10.

The drive tape DT for driving the both master tape MT and the slave tape ST is moved in the forward direction by the take-up reel motor 6M that is servo-controlled for speed and at the same time, the drive tape DT is imparted with a predetermined back tension by the supply reel motor 5M. This back tension is produced by the tension servo control using as a sensor a potensiometer coupled to the tension arm 20 positioned in the vicinity of the supply reel 5. As will be described later, while in the step mode of the apparatus, the tension arm 20 is mechanically locked, under the condition that the tension arm 20 is locked, the potensiometer supplies to a tension servo system a signal voltage which can produce a back tension necessary for the tape running at normal speed. Accordingly, when the drive tape DT starts to run, a control voltage $V_{TN}$ of the tension servo system keeps a nearly constant value.

On the other hand, a control voltage $V_{SP}$ of the speed servo system rises from "0" and reaches a predetermined value corresponding to a predetermined tape transport speed. This state is shown in Figure 9.

As will be clear from Figure 9, in the initial rising time period TD, the control voltage $V_{TN}$ of the tension servo system is higher than the control voltage $V_{SP}$ of the speed servo system. As a result, just after the rising, the torque of the supply reel motor 5M is very larger than that of the take-up reel motor 6M so that the motor 5M urges the motor 6M to rotate in the reverse direction through the drive tape DT.

Although it may be considered to use a mechanical brake to prevent the take-up reel motor 6M from being rotated in the reverse direction, this mechanical brake causes such problems that the brake becomes mechanically unstable when it is released and that a brake shoe will be worn by the frequent operations.

Generally, also when the servo control voltage of the supply reel motor rises more rapidly than the servo control voltage of the take-up reel motor, the take-up reel motor will rotate in the reverse direction similarly.

Figure 10 is a block diagram of the tape transport control apparatus used in the contact printing apparatus of the invention shown in Figure 1. In Figure 10, reference numeral 71 designates a speed error detecting circuit. This detecting circuit 71 compares the rotation detecting signal supplied from a rotation detector 6G coupled to the take-up reel motor 6M with a reference value and produces a speed servo control signal $V_{SP}$ corresponding to a difference therebetween. The speed servo control signal $V_{SP}$ is amplified by an amplifier 72 and then supplied to one fixed contact 73a of an electronic switch 73 and to a comparator 74. Reference numerals 75 and 76 respectively designate motor driving circuits which respectively drive the supply reel motor 5M and the take-up reel motor 6M. A movable contact 73c of the electronic switch 73 is connected to the motor driving circuit 76. A tension error detecting circuit 77 compares the tension detecting signal supplied from a tension sensor 20G associated with the supply reel motor 5M through the tension arm 20 (Figure 1) and the drive tape DT (Figure 1) with a reference value and produces a tension servo control signal $V_{TN}$ corresponding to a difference therebetween. The tension servo control signal $V_{TN}$ is amplified by an amplifier 78 and then supplied to the comparator 74 and the motor driving circuit 75 and through a level adjuster 79 to the other fixed contact 73b of the electronic switch 73. The output from the comparator 74 is supplied to the electronic switch 73 as the control signal thereof.

During the time period TD from the actuation, the speed servo control voltage $V_{SP}$ is smaller than the tension servo control voltage $V_{TN}$ and the electronic switch 73 is placed in the connection state as shown in Figure 10 by the output "0" of the comparator 74. Thus, the motor driving circuit 76 for driving the take-up reel motor 6M is supplied with the tension servo control signal $V_{TN}$ through the level adjuster 79 and the electronic switch 73. For this period, since the level adjuster 79 is adjusted so as to balance the tensions of the both reel motors 5M and 6M, there is no fear that the take-up reel motor 6M will be rotated in the reverse direction.

When the time period TD passed and the speed servo control voltage $V_{SP}$ becomes equal to the tension servo control voltage $V_{TN}$, the output of the comparator 74 becomes "1" so that the electronic switch 73 is changed in position opposite to that of Figure 10 to thereby form the speed servo loop of the take-up reel motor 6M. At this time, since the both reel motors 5M and 6M are balanced in tension by the above-described level adjuster 79, the take-up reel motor 6M starts to rotate in the forward direction smoothly without being rotated in the reverse direction and is stably servo-controlled for speed to reach the normal speed running state.

Accordingly, when the tape starts to run, there is no risk that abnormal tension will be applied to the tape.

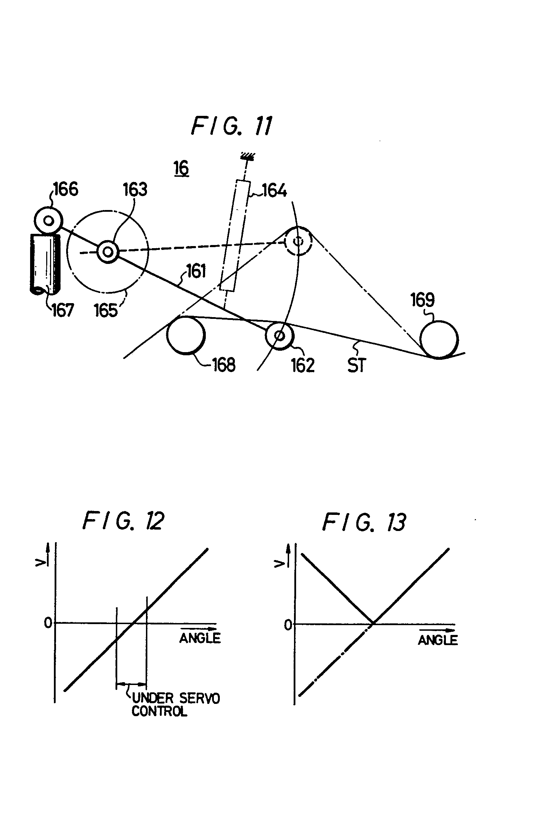

Next, the tension servo control for the slave tape ST will be described with reference to Figures 11 to 15. Figure 11 is a schematic diagram showing an arrangement of the tension arm 16. As shown in Figure 11, an arm member 161 is provided at its one end with a tension roller 162 and is rotatable around a support shaft 163. Reference numeral 164 designates a tension spring and this tension spring 164 is stretched between the arm member 161 and a suitable fixed point. When the slave tape ST runs at normal speed, at the position of the arm 161 and the roller 162 shown by a broken line, the biasing force of the tension spring 164 is balanced with the tape tension. A potensiometer 165 is coupled to the support shaft 163 and produces a voltage corresponding to the rotation angle as the tension detecting signal. The arm member 161 is provided at the other end with a roller 166. When the tape stops running, an air cylinder 167 presses the roller 166 to lock the tension arm 16 with the roller 166 positioned as shown in Figure 11. At this time, the slave tape ST becomes nearly straight line between both impedance rollers 168 and 169.

Since the tension arm 16 is constructed as described above, when the slave tape ST starts to run, if the tension arm 16 is released from locking, the arm member 161 is pulled by the tension spring 164 and rotated in the counter-clockwise direction to urge the roller 162 to pull out the slave tape ST, thus the slave tape ST never being slackened. Conversely, when the slave tape ST starts to stop running, the air cylinder 167 presses the roller 166 to cause the arm member 161 to rotate in the clockwise direction from the position shown by the broken line so that the roller 162 is moved away from the slave tape ST, thus the slave tape ST being slackened.

When the slave tape ST is servo-controlled for tension, the tension arm (sensor) rotates with the tape tension. In this case, as shown in Figure 12, as the position (angle) of the sensor moves from the center of the servo range to the positive or negative direction (in this case, the direction in which the tape tension is increased by the servo control, or the counter-clockwise direction is taken as the positive direction), the voltage supplied to the reel motor varies to restore the predetermined tape tension.

In the tension arm 16 as seen in Figure 11, when the tape tension is increased, the arm member 161 rotates in the counter-clockwise direction similarly to the arm lock. Accordingly, the tension detecting signal from the potensiometer 165 operates the servo system so as to decrease the tape tension certainly.

Consequently, when the slave tape ST starts to stop running, if the tension arm 16 is locked so as to rectilineally extend the tape, there occurs a problem that the tension servo system will promote the tape to be slackened. This problem can be removed by inverting the polarity of the tension servo control voltage when the tension arm 16 is locked as shown in Figure 13.

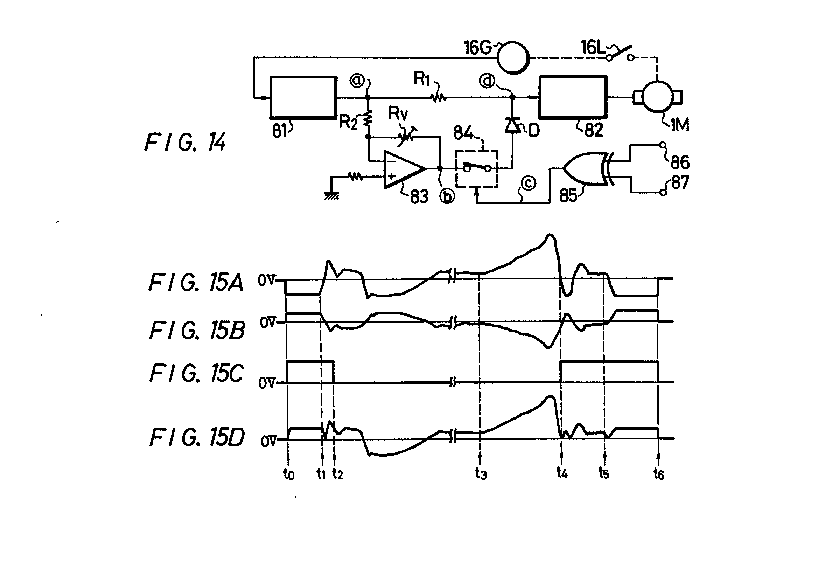

Figure 14 schematically illustrates an arrangement of the tension servo system for the supply reel side. In Figure 14, reference numeral 81 designates a tension error detecting circuit and this detecting circuit 81 compares a tension detecting signal supplied from a tension sensor 16G which is associated to the supply reel motor 1M through the tension arm 16 (not shown) and the slave tape ST (not shown) with a reference value and produces a tension servo control signal (a) corresponding to the difference therebetween. This control signal (a) is supplied through a resistor $R_1$ to a motor driving circuit 82 and through a resistor $R_2$ to the inverted input terminal of an amplifier 83. An inverted output

(b) of the amplifier 83 is adjusted to a predetermined level by a semi-variable resistor Rv and then fed through an electronic switch 84 and a diode D to the motor driving circuit 82. To input terminals 86 and 87 of an exclusive-OR circuit 85, there are respectively supplied parking brake control signals for the supply reel motor 1M and the take-up reel motor (not shown) by which when either of the brake control signals is supplied thereto, the electronic switch 84 is closed by an output (c) of the exclusive-OR circuit 85. Reference numeral 16L designates a virtual switch and when the switch 16L is opened, this shows a state that the tension arm is locked by the air cylinder 167 shown in Figure 11.

Upon stop mode, the tension arm 16 is locked and the both brake control signals are made on. At a start button depressing time point $t_0$ (refer to Figure 15), when the supply reel side brake control signal is turned off, the switch 84 is closed by the output (c) of the exclusive-OR circuit 85. At this time, since the tension arm 16 is locked, the output (a) of the tension error detecting circuit 81 is negative in polarity as shown in Figure 15A so that the motor 1M intends to rotate the supply reel in the tape supplying direction. However, the inverted output (b), as shown in Figure 15B, from the amplifier 83 is supplied through the switch 84 and the diode D to the motor driving circuit 82 so that as shown in Figure 15D, the input signal (d) thereof becomes positive in polarity. Then, the motor 1M is rotated in the tape take-up direction and thus a predetermined tape tension is applied to the tape.

At a time point $t_1$ with a delay of a predetermined time after the start button is depressed, when the tension arm 16 is released from locking, the output (a) of the tension error detecting circuit 81 becomes positive from negative in polarity. Accordingly, the inverted output (b) from the amplifier 83 becomes negative from positive in polarity but the negative polarity portion thereof is blocked by the diode D so that until a time point $t_2$ in which the take-up side brake control signal is turned off, the input (d) to the motor driving circuit 82 remains positive in polarity.

After the time point $t_2$, the switch 84 is opened to allow the output (a) of the tension error detecting circuit 81 to be supplied as it is to the motor driving circuit 82 so that the tape is transported under being normally servo-controlled for tension.

At a time point $t_3$, if the stop bottom is depressed, the tape speed is decelerated so that the output (a) of the tension error detecting circuit 81 is increased in the positive direction and this output (a) becomes zero at time point $t_4$ at which the deceleration is ended. At this time, since the take-up reel side brake control signal is turned on, the take-up reel motor is braked and the switch 84 is closed. At a time point $t_5$ with a delay of predetermined time after the time point $t_4$, when the tension arm 16 is locked, although the output (a) of the tension error detecting circuit 81 becomes negative in polarity, the switch 84 is closed so that the inverted output ⓑ of positive polarity from the amplifier 83 is supplied through the diode D to the motor driving circuit 82 whereby the motor 1M is rotated in the position available for applying a predetermined tape tension to the tape and then stopped. Thereafter, at a succeeding time point $t_6$, the supply reel side brake control signal is turned on and the supply reel motor 1M is braked.

In this way, since the tension arm 16 is locked and released from locking under the condition that the tape is applied with the predetermined tape tension, the tape can start running smoothly. Further, when the tension arm 16 is locked, the tape is extended substantially rectilinearly near the tension rollers so that the tape can be loaded with a great ease.

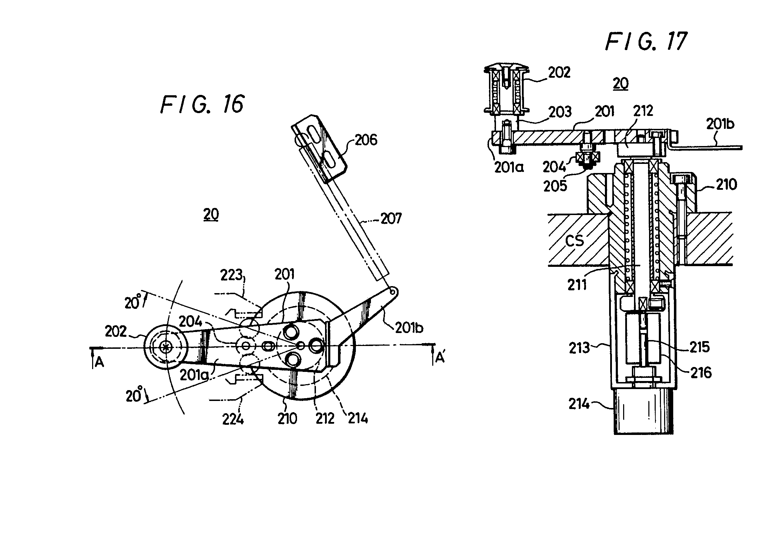

A tension arm and its lock mechanism for the master tape MT and the drive tape DT will be described with reference to Figures 16 to 20.

Figures 16 and 17 are respectively diagrams showing an arrangement of the tension arm 20 (see Figure 1) of the drive tape DT. As shown in Figures 16 and 17, on the upper surface of the left end portion 201a of an arm member 201, there is located a tension roller 202 with its shaft 203 fastened to the arm member 201 by a screw and a ball bearing roller 204 for use in locking is rotatably supported by a support shaft 205 that is implanted on the under surface of the arm member 201. Between a right end portion 201b of the arm member 201 and an engaging member 206, there is stretched a tension spring 207.

Reference numeral 210 designates a housing of the tension arm 20. This housing 210 is inserted into an opening formed through a chassis CS and fastened thereto by a screw. Within the housing 210, there is inserted a main shaft 211 and the both upper and lower ends thereof are supported by bearings. The arm member 201 is fixed by a screw to the main shaft 211 at its upper end portion 212 with a large diameter and hence the arm member 201 and the main shaft 211 are rotated together. To an attaching member 213 which is engaged with the lower portion of the housing 210, there is attached a potentiometer 214. A rotary shaft 215 of the potentiometer 214 is coupled through a helical coupling member 216 to the lower end portion of the main shaft 211 so as to become rotatable with the arm member 201 and the main shaft 211 at the same time. Reference numerals 223 and 224 respectively designate lock members which will be described later and the rotatable range of the arm member 201 is restricted by the both lock members 223 and 224.

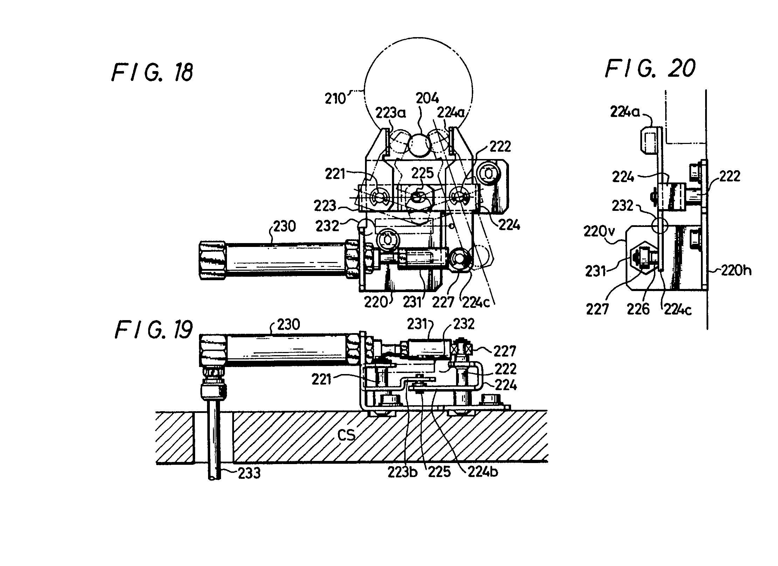

Figures 18 to 20 are respectively diagrams showing an example of the arm lock mechanism. Referring to figures, reference numeral 220 designates a base member and its horizontal portion 220h is fastened to the chassis CS by hexagon socket head screws. To two support shafts 221 and 222 implanted on the horizontal portion 220h of the base member 220, there are respectively pivoted an L-shape bent member 223 and a T-shape bent member 224 each of which is used for the arm lock. These L-shape member 223 and T-shape member 224 are respectively provided with contact piece members 223a and 224a in opposing relation to the roller 204 provided on the under surface of the arm member 201 and opposing leg portions 223b and 224b of the both members 223 and 224 are coupled to each other by a pin 225. Further, to a support shaft 226 implanted to an end portion 224c of the T-shape member 224 opposite to the contact piece member 224a with respect to the shaft 222, there is rotatably supported a roller 227. Reference numeral 230 designates an air cylinder which is inserted into an opening formed through a vertical portion 220v of the base member 220 and then fastened by a nut. Upon non-operation, the air cylinder 230 contacts at an end plane of its rod 231 with the roller 227. Then, a tension spring 232 is stretched between the vertical portion 220v of the base member 220 and the T-shape member 224. Reference numeral 233 designates a hose which is used to send a compressed air to the air cylinder 230.

When the contact printing apparatus is set in the stop mode, the compressed air is sent to the air cylinder 230 from an external supply source through the hose 233. Then, the rod 231 is moved in the direction in which it is protruded from the air cylinder 230, or in the right-hand direction in Figure 18 while pressing the roller 227 against the biasing force of the tension spring 232. Accordingly, the T-shape member 224 is rotated around the support shaft 222 in the counter-clockwise direction. The rotation of the T-shape member 224 is transmitted from the leg portion 224b thereof to the L-shape member 223 at its leg portion 223b coupled through the pin 225 to the leg portion 224b, so that the L-shaped member 223 is rotated around the support shaft 221 in the clockwise direction. As shown by two-dot chain lines in Figure 18, the both members 223 and 224 stop rotating in the lock state where the contact piece members 223a and 224a thereof come in contact with each other across the roller 204 of the arm member 201 and the loading of the tape become easy. At this time, the roller 204 stays at the center of its movable range and the potentiometer 214 produces a signal voltage which can produce a predetermined back tension upon normal speed transportation of the tape.

When the contact printing apparatus is set in the tape transport mode and the supply of the compressed air to the air cylinder 230 is ceased, the T-shape member 224 is rotated in the clockwise direction by the biasing force of the tension spring 232. In accordance with this rotation of the T-shape member 224, the L-shape member 223 is rotated in the counter-clockwise direction to thereby pull the rod 231 of the air cylinder 230 in the left-hand direction so that the rod 231 is returned to the original state as shown by the solid line in Figure 18, thus the arm being released from locking. Further, at this time since the arm is positioned in the center of its operation range and the detecting signal corresponding to the predetermined back tension is produced from the potensiometer 214, without being slackened and extended with too much tension, the tape can start running smoothly.

As set forth above in a greater detail, according to the present invention, it is possible to provide the contact printing apparatus which can print a great amount of program magnetic tapes of high quality rapidly from a master magnetic tape.

**Claims**

1. Contact printing apparatus for a magnetic tape duplicating system comprising:

tape drive means (1—8; 44, 45) for running a recorded master tape (MT) and a blank slave tape (ST) together, said slave tape (ST) having a length which is capable of recording the program of the master tape (MT) a plurality of times and said master tape (MT) being used repeatedly when the program is transferred to one and the same slave tape (ST),

tape guide means for guiding said recorded master tape (MT) and said blank slave tape (ST) in contacting relation at least at a printing station (7, 8),

bias magnetic field generating means (47) provided at said printing station (7, 8) for applying a printing magnetic field to said recorded master tape (MT) and said blank slave tape (ST) and

a system controller circuit (40) connected to said tape drive means (44, 45), tape guide means and bias magnetic field generating means (47) for controlling the contact printing operation, characterized in that,

said master tape (MT) comprises recorded thereon a start cue signal and an end cue signal at the start and the end, respectively, of the program recorded on the master tape (MT), said system controller circuit (40) controls the contact printing operation such that

a) the running of the master tape (MT) in forward direction is decelerated and stopped, when the end cue signal is received,

b) the master tape (MT) is accelerated in reverse direction and rewound with great speed,

c) the running in reverse direction of the master tape (MT) is decelerated and stopped when the start cue signal is received,

d) the master tape (MT) is brought in contact with the blank slave tape (ST), and

e) the master tape (MT) and the slave tape (ST) are accelerated and feed forward with the maximum speed for contacting printing and the bias magnetic field generating means (47) apply said printing magnetic field and

said system controller circuit (40) further comprises a counter (42, 43, 48) connected thereto for counting the number of copies made by contact printing from the same recorded master tape (MT) in response to the detection of cue signals and an indicator (50) connected to said counter (42, 43, 48) for indicating the limit of usage of said recorded master tape (MT).

2. Contact printing apparatus as cited in Claim 1 characterized in that said indicator (50) includes a manually operative presetting circuit (52) which determines said limit of usage of said recorded master tape (MT) during printing operation.

3. Contact printing apparatus as cited in Claim 2 characterized in that said indicator (50) includes a second presetting circuit (59) which determines a desired number of copy tapes during printing operation.

**Patentansprüche**

1. Kontaktkopiergerät für ein Magnetband-Duplizierungssystem, mit

Bandantriebsmitteln (1—8; 44, 45) zum Miteinandertransportieren eines eine Aufzeichnung enthaltenden Mutterbandes (MT) und eines leeren Tochterbandes (ST), wobei das Tochterband (ST) eine Länge hat, die das Aufzeichnen des Programms des Mutterbandes (MT) eine Vielzahl von Malen gestattet, und das Mutterband (MT) wiederholt benutzt wird, wenn das Programm auf ein und dasselbe Tochterband (ST) übertragen wird,

Bandführungsmitteln zum Führen des die Aufzeichnung enthaltenden Mutterbandes (MT) und des leeren Tochterbandes (ST) derart, daß diese zumindest bei einer Kopierstation (7, 8) in Kontakt miteinander sind,

einem Vormagnetisierungsfeld-Erzeugungsmittel (47), das bei der Kopierstation (7, 8) zum Einwirkenlassen eines Kopiermagnetfeldes auf das die Aufzeichnung enthaltende Mutterband (MT) und das leere Tochterband (ST) vorgesehen ist, und

eine Systemsteuerschaltung (40), die mit den Bandantriebsmitteln (44, 45), den Bandführungsmitteln und dem Vormagnetisierungsfeld-Erzeugungsmittel (47) zum Steuern der Kontaktkopieroperation verbunden ist, dadurch gekennzeichnet, daß

das Mutterband (MT) auf sich aufgezeichnet ein Beginn-Achtungssignal und ein Ende-Achtungssignal an dem Beginn bzw. dem Ende des auf dem Mutterband (MT) aufgezeichneten Programms enthält und die Systemsteuerschaltung (40) die Kontaktkopieroperation derart steuert, daß

a) der Bandlauf des Mutterbandes (MT) in Vorwärtsrichtung verzögert und gestoppt wird, wenn das Ende-Achtungssignal empfagen ist,

b) das Mutterband (MT) in Rückwärtsrichtung beschleunigt und mit hoher Geschwindigkeit rückgespult wird,

c) der Bandlauf des Mutterbandes (MT) in Rückwärtsrichtung verzögert und gestoppt wird, wenn das Beginn-Achtungssignal empfangen ist,

d) das Mutterband (MT) in Kontakt mit dem leeren Tochterband (ST) gebracht wird,

e) das Mutterband (MT) und das Tochterband (ST) beschleunigt und mit der Maximalgeschwindigkeit zum Kontaktkopieren vorwärtstransportiert werden und das Vormagnetisierungsfeld-Erzeugungsmittel (47) das Kopiermagnetfeld einwirken läßt und

die Systemsteuerschaltung (40) ferner umfaßt:

eine Zählanordnung (42, 43, 48), die mit ersterer zum Abzählen der Anzahl von Kopien verbunden ist, die durch Kontaktkopieren von demselben eine Aufzeichnung enthaltenden Mutterband (MT) in Reaktion auf die Erfassung von Achtungssignalen hergestellt werden, und

eine Anzeige (50), die mit der Zählanordnung (42, 43, 48) zum Anzeigen der Grenzzahl der Benutzungen des die Aufzeichnung enthaltenden Mutterbandes (MT) verbunden ist.

2.   Kontaktkopiergerät nach Anspruch 1, dadurch gekennzeichnet, daß die Anzeige (50) eine von Hand betätigbare Voreinstellschaltung (52) enthält, die die Grenzzahl von Benutzungen des die Aufzeichnung enthaltenden Mutterbandes (MT) während der Kopieroperation bestimmt.

3.   Kontaktkopiergerät nach Anspruch 2, dadurch gekennzeichnet, daß die Anzeige (50) eine zweite Voreinstellschaltung (56) enthält, die eine gewünschte Anzahl von Kopiebändern während der Kopieroperation bestimmt.

**Revendications**

1. Appareil de tirage par contact destiné à une installation de duplication de bandes magnétiques, comprenant:

un dispositif d'entraînement de bande (1—8; 44, 45) destiné à déplacer ensemble une bande maîtresse enregistrée (MT) et une bande secondaire vierge (ST) la bande secondaire (ST) ayant une longueur telle qu'elle peut enregistrer le programme de la bande maîtresse (MT) plusieurs fois et la bande maîtresse (MT) étant utilisée de manière répétée lorsque le programme est transféré à une seule et même bande secondaire (ST),

des dispositifs de guidage de la bande maîtresse enregistrée (MT) et de la bande secondaire vierge (ST) en contact mutuel au moins à un poste de tirage (7, 8),

un dispositif (47) générateur d'un champ magnétique de polarisation, placé au poste de tirage (7, 8) et destiné à appliquer un champ magnétique de tirage à la bande maîtresse enregistrée (MT) et à la bande secondaire vierge (ST), et

un circuit (40) de commande d'installation connecté au dispositif (44, 45) d'entraînement de bande, aux dispositifs de guidage de bande et au dispositif (47) générateur d'un champ magnétique de polarisation afin qu'il régle l'opération de tirage par contact, caractérisé en ce que:

la bande maîtresse (MT) porte, sous forme enregistrée, un signal de référence de début et un signal de référence de fin placés au début et à la fin respectivement d'un programme enregistré sur la bande maîtresse (MT),

le circuit de commande d'installation (40) commande l'opération de tirage par contact de manière que

a) le déplacement de la bande maîtresse (MT) vers l'avant soit ralenti et interrompu lorsque le signal de référence de fin est reçu,

b) la bande maîtresse (MT) accélère en marche arrière et soit réenroulée à grande vitesse,

c) le déplacement en marche arrière de la bande maîtresse (MT) décélère et s'arrête lorsque le signal de référence de début est reçu,

d) la bande maîtresse (MT) soit mise au contact de la bande secondaire vierge (ST), et

e) la bande maîtresse (MT) et la bande secondaire (ST) accélèrent et avancent à la vitesse maximale convenant au tirage par contact et le dispositif (47) générateur d'un champ magnétique de polarisation applique le champ magnétique de tirage, et

le circuit (40) de commande d'installation comporte en outre un compteur (42, 43, 48) qui lui est connecté et qui est destiné à compter le nombre de copies effectuées par tirage par contact à partir de la même bande maîtresse enregistrée (MT) à la suite de la détection des signaux de référence, et un indicateur (50) connecté au compteur (42, 43, 48) et destiné à indiquer la limite d'utilisation de la bande maîtresse enregistrée (MT).

2. Appareil de tirage par contact selon la revendication 1, caractérisé en ce que ledit indicateur (50) comporte un circuit manuel de préréglage (52) qui détermine la limite d'utilisation de la bande maîtresse enregistrée (MT) pendant l'opération de tirage.

3. Appareil de tirage par contact selon la revendication 2, caractérisé en ce que l'indicateur (50) comporte un second circuit de préréglage (59) qui détermine un nombre voulue de bandes copiées pendant l'opération de tirage.

FIG. 1

EP 0 166 250 B1

## FIG. 2

## FIG. 3

FIG. 4

FIG. 5

FIG. 6

START

M PRESET — 1

M PRESET — 2

m PRESET — 3

PRINT START

PRINT MODE — 4

END CUE
NO
5
YES

N=N-1 — 6

N=0 ?
7
YES
NO

M=M-1 — 8

M=0 ?
9
YES
NO

m=m-1 — 10

m=0 ?
11
YES
NO

REWIND MODE — 12

START CUE
13
NO
YES

INTERRUPT

ERROR — 14

STOP

END — 15

BLACK OUT
DISPLAY

ABNORMAL
TENSION
DISPLAY

PRESET VALUE
COMPLETION
DISPLAY

# FIG. 7

@/ⓑ        ⓔ/ⓕ

```
21  ▷ 61      62      63      67
                           @/ⓑ   ⓔ/ⓕ
                      ⓓ
22  ▷ 64      65   ⓒ  66      68  ○
                                  70
                              69
```

FIG. 8A (β)

FIG. 8B (VHS)

FIG. 8C

FIG. 8D ⟵ Tm ⟶

FIG. 8E (β)

FIG. 8F (VHS)

## FIG. 9

## FIG. 10

## FIG. 11

## FIG. 12

## FIG. 13

F I G. 14

F I G. 15A

F I G. 15B

F I G. 15C

F I G. 15D

FIG. 16

FIG. 17

FIG. 18

FIG. 20

FIG. 19